# EUROPEAN PATENT SPECIFICATION

(11) **EP 2 929 075 B1**
(45) Date of publication and mention of the grant of the patent: **22.03.2017**
(21) Application number: 13826563.2
(22) Date of filing: 10.12.2013
(51) Int. Cl.: D06F 39/00, D06F 33/02, A47L 15/42

(54) **A HOUSEHOLD APPLIANCE HAVING KEY LOCK FUNCTION**
HAUSHALTSGERÄT MIT TASTENSPERRE
APPAREIL MÉNAGER POSSÉDANT UNE FONCTION DE VERROUILLAGE PAR TOUCHES

(30) Priority: 10.12.2012 TR 201214364
(43) Date of publication of application: 14.10.2015
(73) Proprietor: Arçelik Anonim Sirketi, 34950 Istanbul (TR)
(72) Inventor: BUYUKTOPCU, Cagatay, 34950 Istanbul (TR); SUNETCI, Onder, 34950 Istanbul (TR)
(86) International application number: PCT/EP2013/076029
(87) International publication number: WO 2014/090774

(56) References cited:
- EP-A1- 0 859 296
- WO-A2-2010/128725
- US-A1- 2011 180 118

## Description

The present invention relates to a household appliance wherein the key functions are locked by the key lock function being activated. In household appliances, for example in washing machines, key lock function, which is also named as the child lock, is used in order that the user interface functions such as program cancellation, program pause or new program start can be deactivated. The key lock function is activated and deactivated by using at least one predetermined button or button combination. For example, the user activates the key lock by pressing one or more than one button situated on the control panel, and when he/she presses the same buttons again, the key lock is deactivated. In the state of the art, the on/off button is active when the key lock is on. For this reason, especially in household appliances comprising touch buttons, the on/off button can be accidentally triggered, thus causing the household appliance to be accidentally stopped or operated again. This causes energy and time losses.

The WO 2010/128725 A2 discloses a washing machine with a control panel featuring several function buttons, including a power button and a child lock button, wherein the child lock button is said to be capable to prevent a child from operating the function buttons.

The aim of the present invention is the realization of a household appliance that has key lock function and that is provided to be operated in a controlled and safe manner.

The household appliance realized in order to attain the aim of the present invention, explicated in the first claim and the respective claims thereof comprises an on/off button that is situated on the control panel and that performs the turn on/turn off function for the household appliance, more than one button that determines the program functions to be performed, a start button that provides the selected program to be started and a microcontroller that provides the activation or deactivation of the key lock function by means of a predetermined button or button combination. As the user triggers the buttons that activate the key lock function determined in the firmware, the microcontroller activates the key lock function and enables the functions of the buttons to be locked. The microcontroller comprises a non-volatile memory wherein the button or button combinations that activate or deactivate the key lock function are saved. When the key lock function is active, the operation status of the household appliance does not change even if the on/off button is pressed. In other words, if operating, the household appliance continues to operate, if not, the household appliance does not start to operate even if the on/off button is pressed. With the on/off button not operating when the key lock function is active, the household appliance is prevented from being accidentally turned on/turned off and the household appliance is enabled to operate in a controlled manner.

In an embodiment of the present invention, the microcontroller allows the user to determine the activation time of the key lock function. Thus the user, in his/her control, may adjust the program settings by using the buttons until the key lock function becomes active.

In an embodiment of the present invention, the household appliance comprises a screen displaying whether the key lock function is activated or deactivated. The screen provides the commands transmitted from the microcontroller and the key lock status information to be displayed for the user.

By means of the present invention, the on/off button is prevented from performing its function when the key lock function is active. Thus, even if the on/off button is accidentally pressed when the household appliance is operating and the key lock function is active, the household appliance continues to operate or the household appliance is prevented from being energized and operated against the user preference when the household appliance is off.

The household appliance realized in order to attain the aim of the present invention is illustrated in the attached figures, where:

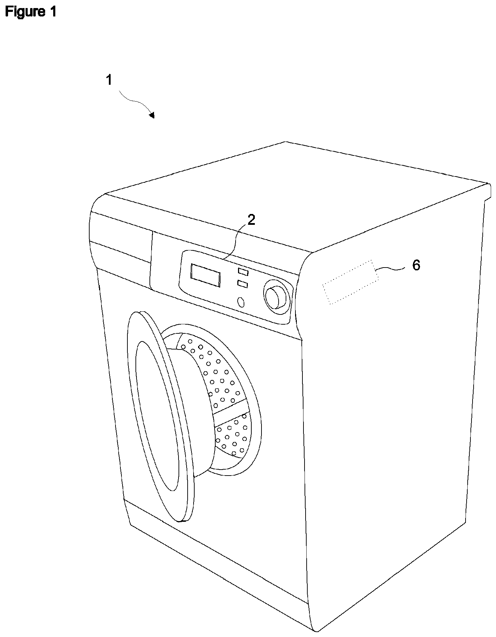

Figure 1 - is the perspective view of a household appliance.

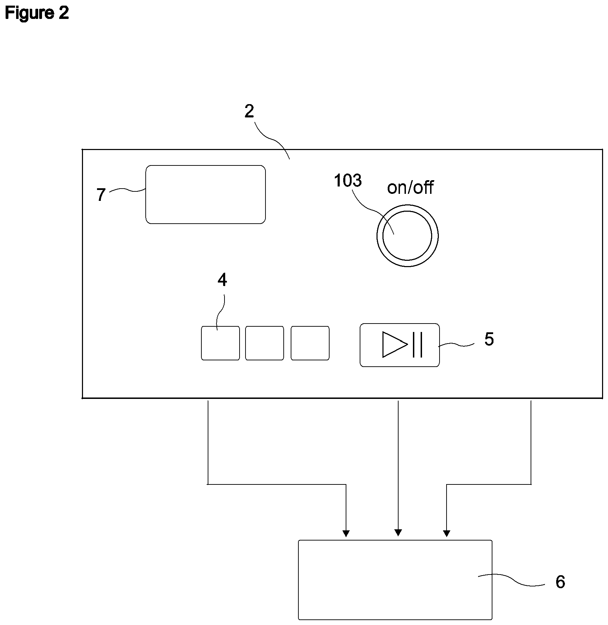

Figure 2 - is the schematic view of a control panel and a microcontroller in an embodiment of the present invention.

The elements illustrated in the figures are numbered as follows:
1. Household appliance
2. Control panel
3. On/off button
4. Button
5. Start button
6. Microcontroller
7. Screen

The household appliance (1) comprises a control panel (2), an on/off button (3) located on the control panel (2) and performing the function of energizing and de-energizing the household appliance (1), more than one button (4) used for determining the program parameters, a start button (5) providing the selected program to be started and to be paused if pressed again and a microcontroller (6) that provides the activation or the deactivation of the key lock function by means of at least one button (4). The on/off button (3) provides the energizing of the household appliance (1) by being changed to the on position and the de-energizing thereof by being changed to the off position. The microcontroller (6) comprises a non-volatile memory wherein the predetermined button (4) or combinations of button (4) that activate the key lock function are saved. The microcontroller (6) enables the on/off button (3) to be inactivated when the key lock function is active. Thus, in cases the on/off button (3) is accidentally triggered, the operation status of the household appliance (1) is prevented from being involuntarily changed.

In an embodiment of the present invention, the microcontroller (6) allows the user to determine the activation time of the key lock function. During this time, the user may change or select program parameters. Thus, the utilization of the household appliance (1) is facilitated.

In an embodiment of the present invention, the household appliance (1) comprises a screen (7) displaying whether the key lock function is activated or deactivated. By means of the screen (7), the user can monitor the key lock function.

In an embodiment of the present invention, the household appliance (1) is a dishwasher.

In an embodiment of the present invention, the household appliance (1) is a washing machine.

In an embodiment of the present invention, the household appliance (1) is a dryer.

In an embodiment of the present invention, the household appliance (1) is an oven.

In the household appliance (1) of the present invention, the on/off button (3) is inactivated when the key lock function is active. The on/off function (3) performs its function only if the key lock function is deactivated by user intervention. Thus, the on/off button (3) is prevented from being accidentally triggered and ending the running program or from energizing and starting up the household appliance (1) that is not operating.

It is to be understood that the present invention is not limited by the embodiments disclosed above and a person skilled in the art can easily introduce different embodiments. These should be considered within the scope of the protection postulated by the claims of the present invention.

## Claims

1. A household appliance (1) comprising a control panel (2), an on/off button (3) located on the control panel (2) and performs the function of energizing and de-energizing the household appliance (1), more than one button (4) used for determining the program parameters, a start button (5) providing the selected program to be started and to be paused if pressed again,
**characterized by** a microcontroller (6) that
- provides the activation or the deactivation of the key lock function by means of at least one button (4),
- enables the on/off button (3) to be inactivated when the key lock function is active,
- allows the user to determine the activation time of the key lock function.

2. A household appliance (1) as in Claim 1, **characterized by** a screen (7) that displays whether the key lock function is activated or deactivated.

3. A household appliance (1) as in any one of the above claims, which is a dishwasher.

4. A household appliance (1) as in any one of the Claims 1 to 2, which is a washing machine.

5. A household appliance (1) as in any one of the Claims 1 to 2, which is a dryer.

6. A household appliance (1) as in any one of the Claims 1 to 2, which is an oven.

## Patentansprüche

1. Haushaltsgerät (1), umfassend ein Bedienfeld (2), eine Ein/Aus-Taste (3), die an dem Bedienfeld (2) angeordnet ist und dazu dient, die Stromversorgung des Haushaltsgeräts (1) ein- und auszuschalten, mehrere Tasten (4) zum Bestimmen der Programmparameter, eine Starttaste (5) die es ermöglicht, dass das ausgewählte Programm gestartet wird und bei erneutem Drücken vorübergehend angehalten wird, **gekennzeichnet durch** einen Mikrocontroller (6), der
- mithilfe wenigstens einer Taste (4) die Aktivierung oder die Deaktivierung der Tastensperrfunktion ermöglicht,
- dafür sorgt, dass die Ein/Aus-Taste (3) deaktiviert wird, wenn die Tastensperrfunktion aktiv ist,
- dem Benutzer erlaubt, die Aktivierungsdauer der Tastensperrfunktion zu bestimmen.

2. Haushaltsgerät (1) nach Anspruch 1, **gekennzeichnet durch** einen Bildschirm (7), der anzeigt, ob die Tastensperrfunktion aktiviert oder deaktiviert ist.

3. Haushaltsgerät (1) nach einem der vorangehenden Ansprüche, das ein Geschirrspüler ist.

4. Haushaltsgerät (1) nach einem der Ansprüche 1 bis 2, das eine Waschmaschine ist.

5. Haushaltsgerät (1) nach einem der Ansprüche 1 bis 2, das ein Trockner ist.

6. Haushaltsgerät (1) nach einem der Ansprüche 1 bis 2, das ein Ofen ist.

## Revendications

1. Un électroménager (1) comprenant un panneau de commande (2), un bouton marche / arrêt (3) qui est situé sur le panneau de commande (2) et qui effectue la fonction de la mise sous tension et la mise hors tension de l'électroménager (1), plus d'un bouton (4) qui est utilisé pour déterminer les paramètres de programme, un bouton de démarrage (5) qui permet de démarrer le programme sélectionné et de le pauser s'il est pressé à nouveau,
**caractérisé par** un microcontrôleur (6)
- qui permet l'activation ou la désactivation de la fonction de verrouillage des touches par l'intermédiaire d'au moins un bouton (4),
- qui permet d'inactiver le bouton marche / arrêt (3) lorsque la fonction de verrouillage des touches est active,
- qui permet à l'utilisateur de déterminer le temps d'activation de la fonction de verrouillage des touches.

2. Un électroménager (1) selon la Revendication 1, **caractérisé par** un écran (7) qui affiche si la fonction de verrouillage des touches est activée ou désactivée.

3. Un électroménager (1) selon l'une quelconque des revendications précédentes, qui est un lave-vaisselle.

4. Un électroménager (1) selon l'une quelconque des revendications de 1 à 2, qui est un lave-linge.

5. Un électroménager (1) selon l'une quelconque des revendications de 1 à 2, qui est un sèche-linge.

6. Un électroménager (1) selon l'une quelconque des revendications de 1 à 2, qui est un four.
